# EUROPÄISCHE PATENTSCHRIFT

(11) **EP 3 587 017 B1**
(45) Veröffentlichungstag und Bekanntmachung des Hinweises auf die Patenterteilung: **17.02.2021**
(21) Anmeldenummer: 19182952.2
(22) Anmeldetag: 27.06.2019
(51) Int. Cl.: B23H 9/10, F01D 5/30

(54) **VERFAHREN ZUM HERSTELLEN EINER LAUFSCHEIBE FÜR EINE STRÖMUNGSMASCHINE**
METHOD FOR THE MANUFACTURE OF A DISC FOR A FLOW ENGINE
PROCÉDÉ DE FABRICATION D'UN DISQUE DE ROULEMENT POUR UNE TURBOMACHINE

(30) Priorität: 27.06.2018 DE 102018210464
(43) Veröffentlichungstag der Anmeldung: 01.01.2020
(73) Patentinhaber: MTU Aero Engines AG, 80995 München (DE)
(72) Erfinder: Kuepper, Anna Carina, 80809 München (DE); Himmelstoss, Waltraud, 80687 München (DE); Zimmermann, Hans, 84036 Landshut (DE); Kreitmair, Florian, 85305 Hirschenhausen (DE); Janko, Heinrich, 85221 Dachau (DE); Binder, Frank, 85716 Unterschleißheim (DE)

(56) Entgegenhaltungen:
- EP-A2- 2 070 619
- US-A1- 2009 260 994
- US-A1- 2009 320 285

## Beschreibung

### Technisches Gebiet

Die vorliegende Erfindung betrifft ein Verfahren zum Herstellen einer Laufscheibe für eine Strömungsmaschine.

### Stand der Technik

Bei der Strömungsmaschine kann es sich bspw. um ein Strahltriebwerk handeln, z. B. um ein Mantelstromtriebwerk. Funktional gliedert sich die Strömungsmaschine in Verdichter, Brennkammer und Turbine. Etwa im Falle des Strahltriebwerks wird angesaugte Luft vom Verdichter komprimiert und in der nachgelagerten Brennkammer mit hinzugemischtem Kerosin verbrannt. Das entstehende Heißgas, eine Mischung aus Verbrennungsgas und Luft, durchströmt die nachgelagerte Turbine und wird dabei expandiert. Die Turbine weist in der Regel mehrere Stufen auf, die jeweils aus einem Leitschaufelkranz und einem nachgelagerten Laufschaufelrad aufgebaut sind. In den einzelnen Stufen wird dem strömenden Heißgas jeweils anteilig Energie entzogen und in eine Rotation der Laufschaufelräder umgesetzt (diese kann dann z. B. zumindest anteilig zum Antreiben des Verdichters genutzt werden).

Die Laufschaufelräder sind dabei jeweils aus einer Laufscheibe aufgebaut, an der die Laufschaufeln umlaufend aufeinanderfolgend jeweils formschlüssig montiert sind. Dazu ist die Laufscheibe auf unterschiedlichen Umlaufpositionen jeweils mit einer Schaufelfußaufnahme versehen, ist nämlich jeweils eine sich axial erstreckende Profilnut eingebracht. In jede Profilnut wird ein Schaufelfuß eingesetzt, dessen Außenwandfläche dann einen Formschluss mit einer die Profilnut begrenzenden Innenwandfläche der Laufscheibe bildet. Aufgrund der Profilierung der Nut ist die Laufschaufel radial formschlüssig gehalten. Die US 2009/0260994 A1 offenbart in diesem Zusammenhang ein "Electro Chemical Grinding Quill", der zur elektrochemischen Bearbeitung in eine Profilnut eingeführt wird. Die US 2009/0320285 A1 betrifft das Herstellen von gekrümmten Profilnuten im EDM-Verfahren, wobei erst eine erste, konvexe Flanke und danach eine zweite, konkave Flanke derselben Profilnut hergestellt wird. Die EP 2 070 619 A2 offenbart ein Verfahren, bei dem eine Profilnut in mehreren Schritten mittels verschiedener spanender Bearbeitungswerkzeuge gefertigt wird.

### Darstellung der Erfindung

Der vorliegenden Erfindung liegt das technische Problem zugrunde, ein besonders vorteilhaftes Verfahren zum Herstellen einer Laufscheibe mit Profilnuten anzugeben.

Dies wird erfindungsgemäß mit dem Verfahren gemäß Anspruch 1 gelöst. Die Profilnuten werden dabei gruppenweise nacheinander eingebracht, also zunächst erste Profilnuten auf ersten Umlaufpositionen und anschließend zweite Profilnuten auf zweiten Umlaufpositionen. Hierbei ist zwischen zwei ersten Umlaufpositionen jeweils immer mindestens eine zweite Umlaufposition angeordnet, bleiben beim Einbringen einer jeweiligen ersten Profilnut also jedenfalls die umlaufend nächstbenachbarten Profilnuten zunächst stehen. Beim Einbringen der zweiten Profilnuten wird bzw. werden die umlaufend nächstbenachbarten ersten Profilnuten dann an ihren Innenwandflächen abgestützt.

Diese Vorgehensweise ist insoweit vorteilhaft, als beim Einbringen der ersten Profilnuten auf den Umlaufpositionen "dazwischen" noch hinreichend Scheibenmaterial vorhanden ist, sodass es bspw. auch im Falle eines spanenden Materialabtrags und der damit einhergehenden Krafteinwirkung beim Einbringen der ersten Profilnuten zu keiner bzw. keiner maßgeblichen Verformung kommt (kritisch ist insoweit der Steg, der zwischen zwei Profilnuten verbleibt). Der spanende Materialabtrag kann wirtschaftlich interessant sein, aber eine mechanische Belastung darstellen. Beim Einbringen der zweiten Profilnuten ist die Scheibe auf den ersten Umlaufpositionen bereits geschwächt, weswegen hierbei die erste Profilnut bzw. -nuten abgestützt werden. Die Nuten werden jeweils an ihren Innenwandflächen abgestützt, womit einer Verformung bzw. einem Versatz der Innenwandflächen zueinander hin (in die Profilnut hinein) entgegengewirkt wird.

Zur Illustration kann man den zwischen zwei Profilnuten verbleibenden Steg als Biegebalken betrachten, der radial innen aufgehängt ist und radial außen ein freies Ende hat. Aufgrund der erfindungsgemäßen Vorgehensweise, also der freibleibenden Zwischenpositionen, sind die beim Einbringen der ersten Profilnuten verbleibenden Biegebalken hinreichend dick und damit stabil bzgl. des bevorzugten spanenden Materialabtrags. Beim Einbringen der zweiten Profilnuten sind die verbleibenden Biegebalken dann deutlich dünner, schafft jedoch die Abstützung an den Innenwandflächen der ersten Profilnuten gleichwohl eine Stabilität. Prinzipiell können die ersten Profilnuten auch spanfrei abtragend, bspw. erosiv eingebracht werden, bevorzugt ist ein Spanen, siehe unten.

Bevorzugte Ausgestaltungen finden sich in den abhängigen Ansprüchen und der gesamten Offenbarung, wobei die Darstellung stets sowohl die Herstellung einer Laufscheibe als auch eines entsprechenden Laufrads bzw. Moduls der Strömungsmaschine betrifft. Angaben wie "axial" und "radial" bzw. "umlaufend" und die dazugehörigen Richtungen betreffen die Drehachse der Laufscheibe, um welche diese im Betrieb rotiert (und die in der Regel mit der Längsachse der Strömungsmaschine zusammenfällt).

Innerhalb einer jeweiligen Gruppe können die Profilnuten in unterschiedlicher Reihenfolge bzw. Taktung eingebracht werden. Im Falle der ersten Profilnuten kann bspw. jeweils sequenziell zur umlaufend nächstbenachbarten ersten Umlaufposition gewechselt werden, was aber nur eine Möglichkeit darstellt. Im Prinzip können die ersten Profilnuten in beliebiger Reihenfolge oder sogar auch simultan eingebracht werden, mit den dazwischen verbleibenden zweiten Umlaufpositionen ist hinreichend Stabilität gegeben. Dies gilt analog für die zweiten Profilnuten, aufgrund der Abstützung auf den ersten Umlaufpositionen.

Im Folgenden werden zunächst verschiedene bevorzugte Möglichkeiten zur Abstützung der ersten Profilnuten diskutiert.

Bei einer bevorzugten Ausführungsform wird ein Einsatz in die abzustützende Profilnut gesetzt, der dann anschließend wieder herausgenommen wird. Der Einsatz liegt an der Innenwandfläche an, vorzugsweise mit einer axial gesehen zumindest abschnittsweise komplementären Kontur, und stützt die Profilnut ab. Nach dem Herausnehmen kann der Einsatz zum Abstützen einer weiteren Profilnut genutzt werden, bspw. derselben Scheibe bei einer sequenziellen Bearbeitung oder einer im Anschluss hergestellten Laufscheibe.

In bevorzugter Ausgestaltung weist der Einsatz eine Spanneinrichtung auf, mit welcher er nach dem Einsetzen in Umlaufrichtung geweitet und damit verspreizt werden kann. Als Spannvorrichtung kann bspw. ein Keilmechanismus vorgesehen sein, z. B. durch einen Spann- bzw. Schraubbolzen angetrieben. Beim Spannen kann bspw. ein Keil bzw. Doppelkeil axial oder auch radial versetzt werden und dabei einen Klemmkörper des Einsatzes mit entsprechenden Schrägflanken in Umlaufrichtung nach außen drücken. Der Einsatz wird durch Betätigen der Spanneinrichtung aufgespreizt, er ist reversibel einsetz- und herausnehmbar (nach Lösen der Spanneinrichtung), zugleich sind hohe Abstützkräfte möglich.

Bei einer anderen bevorzugten Ausführungsform wird in die abzustützende Profilnut ein Verfüllmaterial eingebracht. Dieses ist beim Einbringen in einem formlosen bzw. -neutralen Zustand, in der Profilnut geht es in einen formfesten Zustand über. Anschließend wird das Verfüllmaterial dann wieder aus der Profilnut entfernt, was je nach Verfüllmaterial bspw. chemisch, thermisch oder auch erosiv bzw. mechanisch erfolgen kann (ist das formfeste Verfüllmaterial "weicher" als das Scheibenmaterial, kann eine mechanische Entfernung eine geringere Belastung als das spannende Einbringen einer Profilnut darstellen).

In bevorzugter Ausgestaltung wird das Verfüllmaterial in einer zumindest viskos fließfähigen Form eingebracht, es kann bspw. eingegossen bzw. auch eingestrichen werden. Bevorzugt kann ein Kunststoffmaterial Anwendung finden, insbesondere ein Hartkunststoff, bspw. Polycarbonat. Alternativ ist jedoch auch ein metallisches Verfüllmaterial möglich, z. B. Aluminium. Im Einzelnen kann auch von der Geometrie der Profilnuten (T/B, siehe unten) abhängen, ob mit einem Kunststoffmaterial abgestützt werden kann, das leichter auszulösen ist, oder ein metallisches Verfüllmaterial erforderlich ist.

Bei einer bevorzugten Ausführungsform füllt das formlos/formneutral eingebrachte Verfüllmaterial nicht für sich die gesamte Profilnut aus, sondern wird zusätzlich ein Formkörper (in formfesten Zustand) in die Profilnut eingebracht. Dieser wird also gewissermaßen durch Fügen in der Profilnut befestigt, bspw. eingeklebt. Anschlie-ßend kann dann nur das Verfüllmaterial ausgelöst und der Formkörper herausgenommen werden, oder es kann auch das Verfüllmaterial samt Formkörper ausgelöst werden.

In bevorzugter Ausgestaltung liegt umlaufend zwischen zwei ersten Profilnuten immer genau eine zweite Profilnut. Bei deren Einbringen werden beide umlaufend nächstbenachbarten ersten Profilnuten abgestützt. Liegt hingegen zwischen zwei ersten Profilnuten mehr als eine Umlaufposition, kann es beim Einbringen der zweiten Profilnut auch ausreichend sein, wenn nur eine umlaufend nächstbenachbarte erste Profilnut abgestützt wird, weil in der entgegengesetzten Umlaufrichtung noch genug Scheibenmaterial stehen geblieben ist.

Solange Zwischenpositionen verbleiben, ist im Allgemeinen sogar auch eine gewisse Verschachtelung beim Einbringen der ersten und zweiten Profilnuten denkbar. Es können bspw. zwei umlaufend nächstbenachbarte erste Profilnuten eingebracht und abgestützt werden, und kann dann die zweite Profilnut dazwischen noch vor dem Einbringen weiterer erster Profilnuten eingebracht werden. In bevorzugter Ausgestaltung werden jedoch zunächst alle ersten Profilnuten und anschließend alle zweiten Profilnuten eingebracht.

Bei einer bevorzugten Ausführungsform sind alle ersten Profilnuten abgestützt, wenn eine jeweilige zweite Profilnut eingebracht wird. Mit dem Abstützen wird dann also nicht von Nut zu Nut gewechselt (was im Allgemeinen möglich ist), sondern es wird in sämtlichen ersten Profilnuten ein Verfüllmaterial oder Einsatz platziert, dann werden die zweiten Profilnuten eingebracht.

Bei einer bevorzugten Ausführungsform werden die ersten Profilnuten durch spanenden Materialabtrag eingebracht, also mit einer geometrisch bestimmten oder im Allgemeinen auch unbestimmten Schneide. Es ist bspw. auch ein Fräsen denkbar, bevorzugt ist ein Räumen, bspw. mit einem Räumwerkzeug aus einem Schnellarbeitsstahl (*High Speed Steel,* HSS). Das Räumen kann an sich gegenüber anderen spanenden Verfahren wirtschaftlich interessant sein, wobei dieser Vorteil erst im Zuge der erfindungsgemäßen Vorgehensweise vollends zu tragen kommt. Wie eingangs diskutiert, ist das Scheibenmaterial beim Einbringen der ersten Profilnuten aufgrund der zunächst verbleibenden Zwischenpositionen weniger verformungsanfällig, sind also beim Materialabtragen größere Kräfte unschädlich. Da die Kräfte typischerweise mit dem Werkzeugverschleiß zunehmen, lassen sich mit dem erfindungsgemäßen Ansatz die Standzeiten verlängern. Wären die beim Spanen zulässigen Kräfte aufgrund "dünner" Stege hingegen deutlich limitiert, würde dies einen häufigen Werkzeugwechsel mit entsprechenden ökonomischen Nachteilen bedeuten. Die geforderten Toleranzen ließen sich mitunter auch gar nicht mehr erreichen (auch ein kraftoptimiertes Räumwerkzeug ist niemals völlig kraftfrei), was aufwändiges manuelles Nachbearbeiten erforderlich machen würde.

In bevorzugter Ausgestaltung werden die zweiten Profilnuten durch spanenden Materialabtrag, insbesondere durch Räumen eingebracht. Die eben für die ersten Profilnuten geschilderten Vorteile gelten analog. Aufgrund der Abstützung ist beim Einbringen der zweiten Profilnuten ein höherer Krafteintrag möglich, lassen sich also die Werkzeuge länger nutzen bzw. wird eine manuelle Nachbearbeitung überflüssig.

Bei einer alternativ bevorzugten Ausführungsform werden die zweiten Profilnuten in einem spanfrei abtragenden Verfahren (also nicht spanend) eingebracht, bspw. erosiv, etwa durch Funken- bzw. Drahterodieren. Der Vorteil eines erosiven Verfahrens kann in einem geringeren Krafteintrag liegen (im Vergleich zum Spanen). Dieser Gegenstand wird deshalb auch unabhängig von dem hauptanspruchsgemäßen Abstützen der ersten Profilnuten als Erfindung betrachtet und soll entsprechend offenbart sein. Gegenstand der Offenbarung ist also insbesondere auch ein Verfahren, bei dem zunächst die ersten Profilnuten spanfrei oder vorzugsweise spanend eingebracht werden und anschließend die zweiten Profilnuten erosiv eingebracht werden, wobei keine Abstützung der ersten Profilnuten erforderlich ist (sie ist möglich, aber nicht obligatorisch).

Eine bevorzugte Ausführungsform betrifft die Geometrie der Profilnuten bzw. dazwischen verbleibenden Stege, konkret das Verhältnis aus radialer Nuttiefe T und in Umlaufrichtung genommene Stegbreite B. Dieses Verhältnis liegt bevorzugt bei mindestens 2,5, wobei mindestens 3 bzw. 3,5 weiter und besonders bevorzugt sind. Mögliche Obergrenzen können bspw. bei höchstens 8 bzw. 7 liegen. Ein entsprechend hohes T/B-Verhältnis kann bspw. im Falle eines Getriebefan-Triebwerks in der schnelllaufenden Niederdruckturbine verortet sein. Ohne die erfindungsgemäße Vorgehensweise lassen sich Profilnuten mit einem T/B-Verhältnis größer 2,5 bzw. 3,5 nicht mehr wirtschaftlich sinnvoll herstellen (Werkzeugstandzeit und manuelle Nacharbeit, siehe vorne).

Vielfach werden die Laufscheiben auch tendenziell kleiner (von Generation zu Generation), wobei die Zahl der Schaufeln in der Regel zunimmt (um einen vergleichbaren bzw. verbesserten Wirkungsgrad zu erreichen). Die Bauteile werden insoweit filigraner, es nehmen also die Stegbreiten ab, also nimmt das T/B-Verhältnis zu. Prinzipiell werden auch die geforderten Toleranzen enger, was mit dem vorliegenden Ansatz gleichwohl mit zumindest eingeschränkter oder gänzlich ohne manuelle Nachbearbeitung erreicht werden kann.

Im Einzelnen wird die radiale Tiefe T jeweils bis zum Profilgrund der jeweiligen Profilnut genommen, und zwar vom Umfang der Scheibe ausgehend. Die Breite B wird auf Höhe einer Einschnürung des Stegs genommen, also radial innerhalb der Tragflanken der beiden nächstbenachbarten Nuten. Die Profilnuten können als sogenannte Schwalbenschwanznuten vorgesehen sein, die Innenwandflächen können also jeweils genau eine Tragflanken bilden. Es können aber andererseits auch tannenbaumförmige Profilnuten bevorzugt sein, wobei an jeder Innenwandfläche mindestens zwei Tragflanken angeordnet sind. Entsprechend gibt es über die radiale Erstreckung des Stegs dann auch mehrere Einschnürungen, wobei die Breite B in diesem Fall als arithmetisches Mittel der Breiten an diesen Einschnürungen genommen wird.

Die Erfindung betrifft auch ein Verfahren zum Herstellen eines Moduls einer Strömungsmaschine, insbesondere eines Flugtriebwerks. Bei dem Modul kann es sich bevorzugt um ein Turbinen-, insbesondere Niederdruckturbinenmodul handeln. Es weist ein Schaufelrad mit einer vorliegend diskutierten Laufscheibe auf, in deren Profilnuten Laufschaufeln eingesetzt sind. Selbstverständlich kann das Modul auch mehrere solche Schaufelräder aufweisen.

### Kurze Beschreibung der Zeichnungen

Im Folgenden wird die Erfindung anhand eines Ausführungsbeispiels näher erläutert, wobei die einzelnen Merkmale im Rahmen der nebengeordneten Ansprüche auch in anderer Kombination erfindungswesentlich sein können und auch weiterhin nicht im Einzelnen zwischen den unterschiedlichen Anspruchskategorien unterschieden wird.

### Im Einzelnen zeigt

- Figur 1: ein Strahltriebwerk in einem Axialschnitt;
- Figur 2: einen Ausschnitt einer Laufscheibe mit einer Profilnut;
- Figur 3: in schematischer Darstellung eine Laufschaufel mit einem Schaufelfuß zum Einsetzen in die Laufscheibe gemäß Figur 2;
- Figur 4a-c: eine Laufscheibe in schematischer Darstellung zur Illustration des erfindungsgemäßen Herstellungsverfahrens.

### Bevorzugte Ausführung der Erfindung

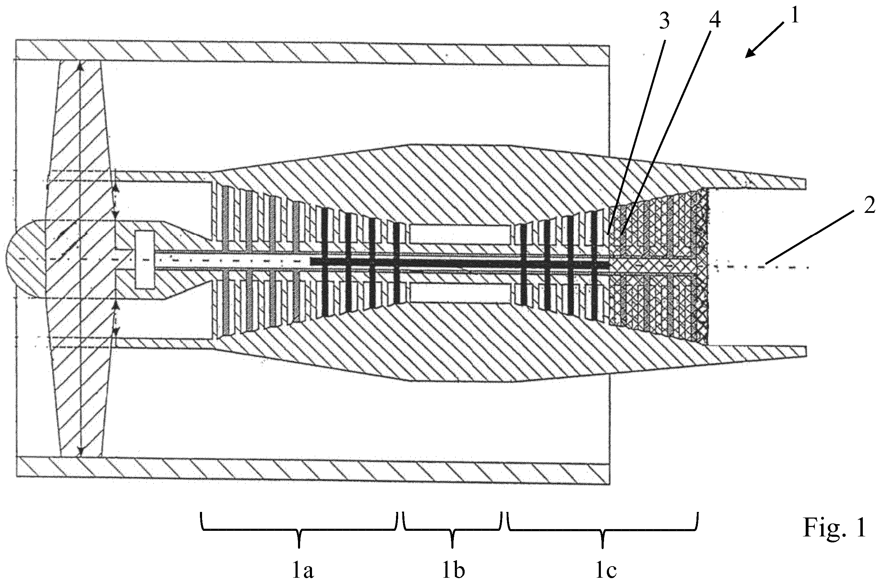

**Figur 1** zeigt eine Strömungsmaschine 1, konkret ein Mantelstromtriebwerk, in einem Axialschnitt. Die Strömungsmaschine 1 gliedert sich funktional in Verdichter 1a, Brennkammer 1b und Turbine 1c. Sowohl der Verdichter 1a als auch die Turbine 1c sind jeweils aus mehreren Stufen aufgebaut. Jede der Stufen setzt sich aus einem Leitschaufelkranz und einem darauffolgenden Laufschaufelrad zusammen. Der Übersichtlichkeit halber ist für die Turbine 1c nur für eine der Stufen der Leitschaufelkranz 3 und das zugehörige Laufschaufelrad 4 mit Bezugszeichen referenziert. Im Verdichter 1a wird die angesaugte Luft komprimiert, sie wird dann in der nachgelagerten Brennkammer 1b mit hinzugemischten Kerosin verbrannt. Das Heißgas durchströmt den Heißgaskanal und treibt dabei das Laufschaufelrad 4 bzw. die Laufschaufelräder an, die um die Drehachse 2 rotieren.

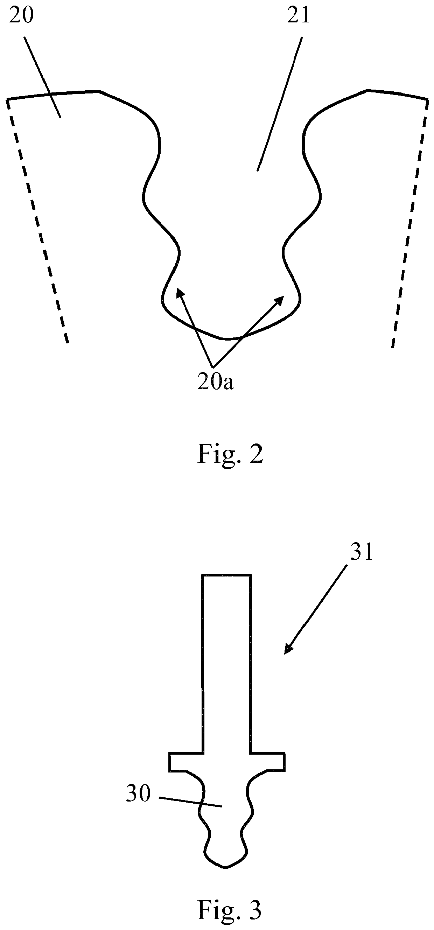

**Figur 2** zeigt eine Detailansicht von einem Teil des Laufschaufelrads 4, nämlich einer Laufscheibe 20. In diese ist eine Profilnut 21 eingebracht, in die ein Schaufelfuß 30 einer Laufschaufel 31 eingesetzt wird, vergleiche **Figur 3** zur Illustration. Aufgrund der Profilierung der Profilnut 21, also aufgrund der Kontur der Innenwandflächen 20a, ist die Laufschaufel 31 darin radial formschlüssig gehalten.

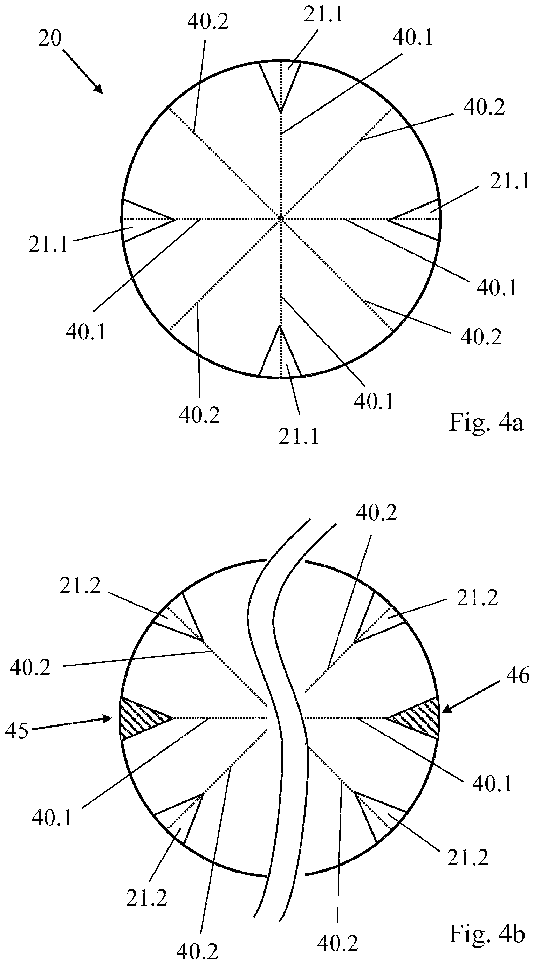

Die Herstellung der Laufscheibe 20 wird anhand der Figuren 4a-c erläutert. In einem ersten Schritt gemäß **Figur 4a** werden in die Scheibe 20 die ersten Profilnuten 21.1 auf den ersten Umlaufpositionen 40.1 eingebracht. Zwischen jeder der ersten Umlaufpositionen 40.1 ist jeweils eine zweite Umlaufposition 40.2 angeordnet, es bleiben also zunächst Zwischenpositionen frei. Dementsprechend ist umlaufend noch immer hinreichend Material vorhanden, können die ersten Profilnuten 21.1 also durch Räumen eingebracht werden.

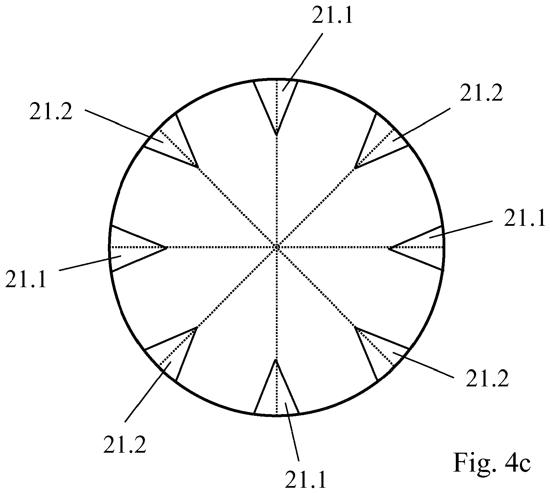

Anschließend wird gemäß **Figur 4b** in den ersten Profilnuten 21.1 ein Einsatz 45 oder Verfüllmaterial 46 angeordnet. In der Praxis wird typischerweise eine der beiden Alternativen gewählt, der Einfachheit halber sind in Figur 4b beide gezeigt. Werden dann gemäß Figur 4b die zweiten Profilnuten 21.2 auf den zweiten Umlaufpositionen 40.2 eingebracht, sind die ersten Profilnuten 21.1 hierbei abgestützt. Entsprechend können auch die zweiten Profilnuten 21.2 durch Räumen eingebracht werden, es wird auf die Vorteilsangaben der Beschreibungseinleitung verwiesen. Die Einsätze 45 bzw. das Verfüllmaterial 46 werden dann wieder entfernt, vgl. **Figur 4c****.** Es resultiert eine enge Staffelung der Profilnuten 21.1,21.2 bzw. ein großes T/B-Verhältnis.

### BEZUGSZEICHENLISTE

| | |
|---|---|
| Strömungsmaschine | 1 |
| Laufschaufelrad | 4 |
| Laufscheibe | 20 |
| Innenwandfläche | 20a |
| Profilnuten | 21 |
| Erste | 21.1 |
| Zweite | 21.2 |
| Schaufelfuß | 30 |
| Laufschaufel | 31 |
| Erste Umlaufposition | 40.1 |
| Zweite Umlaufposition | 40.2 |
| Einsatz | 45 |
| Verfüllmaterial | 46 |

## Patentansprüche

1. Verfahren zum Herstellen einer Laufscheibe (20) für eine Strömungsmaschine (1),
die auf mehreren Umlaufpositionen (40.1, 40.2) Schaufelfußaufnahmen bildet, wozu auf einer jeweiligen Umlaufposition (40.1, 40.2) jeweils eine sich axial erstreckende, umlaufend von Innenwandflächen (20a) der Laufscheibe (20) begrenzte Profilnut (21) eingebracht ist,
bei welchem Herstellungsverfahren in eine Scheibe (20)
- zunächst erste Profilnuten (21.1) auf ersten Umlaufpositionen (40.1) eingebracht werden und
- anschließend eine zweite Profilnut (21.2) auf einer zweiten Umlaufposition (40.2) umlaufend zwischen den ersten Profilnuten (21.1) eingebracht wird,
wobei umlaufend zwischen zwei ersten Umlaufpositionen (40.1) jeweils immer mindestens eine zweite Umlaufposition (40.2) angeordnet ist,
und wobei beim Einbringen einer jeweiligen zweiten Profilnut (21.2) eine umlaufend nächstbenachbarte erste Profilnut (21.1) an den Innenwandflächen (20a) abgestützt wird.

2. Verfahren nach Anspruch 1, bei welchem in die umlaufend nächstbenachbarte erste Profilnut (21.1) ein Einsatz (45) eingesetzt wird, der zum Abstützen an den Innenwandflächen (20a) anliegt und nach dem Einbringen der jeweiligen zweiten Profilnut (21.2) wieder herausgenommen wird.

3. Verfahren nach Anspruch 2, bei welchem der Einsatz (45) eine Spanneinrichtung aufweist und nach dem Einsetzen in die umlaufend nächstbenachbarte erste Profilnut (21.1) durch Betätigen der Spanneinrichtung in Umlaufrichtung geweitet und damit gegen die Innenwandflächen (20a) verspreizt wird.

4. Verfahren nach Anspruch 1, bei welchem in die umlaufend nächstbenachbarte erste Profilnut (21.1) ein Verfüllmaterial (46) eingebracht wird, das sich zum Abstützen an die Innenwandflächen (20a) anlegt und in der Profilnut (21.1) in einen formfesten Zustand übergeht.

5. Verfahren nach Anspruch 4, bei welchem das Verfüllmaterial (46) bei dem Einbringen zumindest viskos fließfähig ist und in der umlaufend nächstbenachbarten ersten Profilnut (21.1) aushärtet.

6. Verfahren nach Anspruch 4 oder 5, bei welchem mit dem Verfüllmaterial (46) ein Formköper in der umlaufend nächstbenachbarten ersten Profilnut (21.1) befestigt wird, der bereits beim Einbringen in die Profilnut (21.1) in einem formfesten Zustand ist.

7. Verfahren nach einem der vorstehenden Ansprüche, bei welchem die ersten (40.1) und die zweiten Umlaufpositionen (40.2) umlaufend abwechselnd aufeinanderfolgen und beim Einbringen jeder zweiten Profilnut (21.2) beide umlaufend nächstbenachbarten ersten Profilnuten (21.1) jeweils an ihren Innenwandflächen (20a) abgestützt werden.

8. Verfahren nach Anspruch 7, bei welchem zunächst alle ersten Profilnuten (21.1) eingebracht werden und erst anschließend die zweiten Profilnuten (21.2) eingebracht werden.

9. Verfahren nach den Ansprüchen 7 und 8, bei welchem, wenn eine jeweilige zweite Profilnut (21.2) eingebracht wird, alle ersten Profilnuten (21.1) jeweils an ihren Innenwandflächen (20a) abgestützt werden.

10. Verfahren nach einem der vorstehenden Ansprüche, bei welchem die ersten Profilnuten (21.1) durch spanenden Materialabtrag eingebracht werden, vorzugsweise durch Räumen.

11. Verfahren nach einem der vorstehenden Ansprüche, bei welchem die zweiten Profilnuten (21.2) durch spanenden Materialabtrag eingebracht werden, vorzugsweise durch Räumen.

12. Verfahren nach einem der Ansprüche 1 bis 10, bei welchem die zweiten Profilnuten (21.2) in einem spanfrei abtragenden Verfahren eingebracht werden.

13. Verfahren nach einem der vorstehenden Ansprüche, bei welchem ein zwischen zwei umlaufend nächstbenachbarten Profilnuten (21) verbleibender Steg eine in Umlaufrichtung genommene Breite B hat, die radial auf Höhe einer Einschnürung des Stegs genommen wird, und die Profilnuten (21) jeweils eine radial genommene Tiefe T haben, wobei T/B ≥ 2,5.

14. Verfahren nach einem der vorstehenden Ansprüche, bei welchem die Profilnuten (21) Tannenbaumnuten sind, also jeweils an jeder der Innwandflächen (20a) mehrere Tragflanken ausgebildet sind.

15. Verfahren zum Herstellen eines Moduls einer Strömungsmaschine (1), insbesondere eines Flugtriebwerks, welches Modul ein Laufschaufelrad (4) mit einer Laufscheibe (20) und Laufschaufeln (31) aufweist, wobei die Laufscheibe (20) in einem Verfahren nach einem der vorstehenden Ansprüche hergestellt wird und in die Profilnuten (21) jeweils eine Laufschaufel (31) mit einem Laufschaufelfuß (30) eingesetzt wird.

## Claims

1. Method for producing a rotor disc (20) for a turbomachine (1), which forms blade root receptacles in a plurality of circumferential positions (40.1, 40.2), for which purpose a profile groove (21) which extends axially and is circumferentially delimited by inner wall surfaces (20a) of the rotordisc (20) is introduced in each case in a relevant circumferential position (40.1, 40.2), in which production method
- first profile grooves (21.1) are first introduced into a disc (20) in first circumferential positions (40.1) and
- a second profile groove (21.2) is then introduced circumferentially between the first profile grooves (21.1) in a second circumferential position (40.2),
wherein at least one second circumferential position (40.2) is always arranged circumferentially between two first circumferential positions (40.1), and wherein a circumferentially adjacent first profile groove (21.1) is supported on the innerwall surfaces (20a) when a relevant second profile groove (21.2) is introduced.

2. Method according to claim 1, in which an insert (45) is inserted into the circumferentially adjacent first profile groove (21.1), which insert rests against the innerwall surfaces (20a) for support and is removed again after the relevant second profile groove (21.2) has been introduced.

3. Method according to claim 2, in which the insert (45) has a clamping device and, after being inserted into the circumferentially adjacent first profile groove (21.1), is widened in the circumferential direction by actuating the clamping device and is thus expanded against the inner wall surfaces (20a).

4. Method according to claim 1, in which a filling material (46) is introduced into the circumferentially adjacent first profile groove (21.1), which filling material rests against the innerwall surfaces (20a) for support and transitions into a dimensionally stable state in the profile groove (21.1).

5. Method according to claim 4, in which the filling material (46) is at least viscously flowable when it is introduced and cures in the circumferentially adjacent first profile groove (21.1).

6. Method according to either claim 4 or claim 5, in which a molded body is fastened in the circumferentially adjacent first profile groove (21.1) by means of the filling material (46), which molded body is already in a dimensionally stable state when it is introduced into the profile groove (21.1).

7. Method according to any of the preceding claims, in which the first (40.1) and the second circumferential positions(40.2)followone anothercircumferentially in an alternating manner and the two circumferentially adjacentfirst profile grooves (21.1) are each supported on the inner wall surfaces (20a) thereof when each second profile groove (21.2) is introduced.

8. Method according to claim 7, in which all of the first profile grooves (21.1) are introduced first and only then are the second profile grooves (21.2) introduced.

9. Method according to claim 7 and claim 8, in which all of the first profile grooves (21.1) are each supported on the inner wall surfaces (20a) thereof when a relevant second profile groove (21.2) is introduced.

10. Method according to any of the preceding claims, in which the first profile grooves (21.1) are introduced by machining material removal, preferably by broaching.

11. Method according to any of the preceding claims, in which the second profile grooves (21.2) are introduced by machining material removal, preferably by broaching.

12. Method according to any of claims 1 to 10, in which the second profile grooves (21.2) are introduced in a non-machining removal method.

13. Method according to any of the preceding claims, in which a web remaining between two circumferentially adjacent profile grooves (21) has a width B which is measured in the circumferential direction and which is measured radially at the level of a necked portion of the web, and the profile grooves (21) each have a radially measured depth T, where T/B ≥ 2.5.

14. Method according to any of the preceding claims, in which the profile grooves (21) are fir tree slots, i.e. a plurality of supporting flanks is formed on each of the inner wall surfaces (20a) in each case.

15. Method for producing a module of a turbomachine (1), in particular an aircraft engine, which module has a rotor blade wheel (4) having a rotor disc (20) and rotor blades (31), wherein the rotor disc (20) is produced in a method according to any of the preceding claims and a rotor blade (31) having a rotor blade root (30) is inserted into each of the profile grooves (21).

## Revendications

1. Procédé de fabrication d'un disque de roulement (20) destiné à une turbomachine (1), lequel forme des logements de pieds d'aubes dans plusieurs positions circonférentielles (40.1, 40.2), respectivement une rainure profilée (21), qui s'étendt axialement et est délimitée dans la direction circonférentielle par des surfaces de paroi intérieure (20a) du disque de roulement (20), étant à cet effet insérée dans la position circonférentielle respective (40.1, 40.2),
selon lequel procédé de fabrication
- de premières rainures profilées (21.1) sont d'abord insérées dans un disque (20) dans de premières positions circonférentielles (40.1) et
- une seconde rainure profilée (21.2) est ensuite insérée dans une seconde position circonférentielle (40.2) entre les premières rainures profilées (21.1), respectivement toujours au moins une seconde position circonférentielle (40.2) étant disposée entre deuxpremières positions circonférentielles (40.1), et,
lors de l'insertion d'une seconde rainure profilée respective (21.2), une première rainure profilée (21.1) la plus adjacente dans la direction circonférentielle s'ap puyant sur les surfaces de paroi intérieure (20a).

2. Procédé selon la revendication 1, selon lequel un insert (45) est inséré dans la première rainure profilée (21.1) la plus adjacente dans la direction circonférentielle, lequel insert repose sur les surfaces de paroi intérieure (20a) pour l'appui et est à nouveau retiré après l'insertion de la seconde rainure profilée respective (21.2).

3. Procédé selon la revendication 2, selon lequel l'insert (45) comporte un dispositif de serrage et, après insertion dans la première rainure profilée (21.1) la plus adjacente dans la direction circonférentielle, est élargi dans la direction circonférentielle par l'actionnement du dispositif de serrage et ainsi serré contre les surfaces de paroi intérieure (20a).

4. Procédé selon la revendication 1, selon lequel un matériau de remplissage (46) est inséré dans la première rainure profilée (21.1) la plus adjacente dans la direction circonférentielle, lequel matériau repose sur les surfaces de paroi intérieure (20a) pour l'appui et passe à un état indéformable dans la rainure profilée (21.1).

5. Procédé selon la revendication 4, selon lequel le matériau de remplissage (46) est au moins visqueusement coulant lorsqu'il est inséré et durcit dans la première rainure profilée (21.1) la plus adjacente dans la direction circonférentielle,

6. Procédé selon la revendication 4 ou 5, selon lequel un corps moulé est fixé avec ledans la première rainure profilée (21.1) adjacente dans la direction circonférentielle au moyen du matériau de remplissage (46), lequel corps moulé se trouve déjà dans un état indéformable lors de l'insertion dans la rainure profilée (21.1).

7. Procédé selon l'une des revendications précédentes, selon lequel la première (40.1) et la seconde positions circonférentielles (40.2) se succèdent alternativement dans la direction circonférentielle et, lors de l'insertion de chaque seconde rainure profilée (21.2), les deux premières rainures profilées (21.1) les plus adjacentes dans la direction circonférentielle s'appuient respectivement sur leurs surfaces de paroi intérieure (20a).

8. Procédé selon la revendication 7, selon lequel toutes les premières rainures profilées (21.1) sont d'abord insérées et les secondes rainures profilées (21.2) sont insérées seulement ensuite.

9. Procédé selon les revendications 7 et 8, selon lequel, lorsqu'une seconde rainure profilée (21.2) respective est insérée, toutes les premières rainures profilées (21.1) s'appuient respectivement sur leurs surfaces de paroi intérieure respectives (20a).

10. Procédé selon l'une des revendications précédentes, selon lequel les premières rainures profilées (21.1) sont insérées par enlèvement de matériau par usinage, de préférence par brochage.

11. Procédé selon l'une des revendications précédentes, selon lequel les secondes rainures profilées (21.2) sont insérées par enlèvement de matériau par usinage, de préférence par brochage.

12. Procédé selon l'une des revendications 1 à 10, selon lequel les secondes rainures profilées (21.2) sont insérées par un procédé d'enlèvement de matériau sans usinage.

13. Procédé selon l'une des revendications précédentes, selon lequel une traverse restant entre deux rainures profilées (21) les plus adjacentes dans la direction circonférentielle présente une largeur B prise dans la direction circonférentielle, laquelle largeur B est prise radialement au niveau d'un rétrécissement de la traverse, et les rainures profilées (21) présentant respectivement une profondeur T prise radialement, où T/B ≥ 2,5.

14. Procédé selon l'une des revendications précédentes, selon lequel les rainures profilées (21) sont des rainures de sapin, c'est-à-dire que plusieurs flancs de support sont réalisés sur chacune des surfaces de paroi intérieure (20a).

15. Procédé de fabrication d'un module d'une turbomachine (1), en particulier d'un moteur d'avion, lequel module comporte une roue à aubes mobiles (4) dotée d'un disque de roulement (20) et d'aubes mobiles (31), le disque de roulement (20) étant fabriqué selon un procédé selon l'une des revendications précédentes, et une aube mobile (31) dotée d'un pied d'aubes mobiles (30) étant respectivement insérée dans les rainures profilées (21).
